# EUROPEAN PATENT APPLICATION

(11) **EP 3 537 586 A1**
(43) Date of publication of application: **11.09.2019**
(21) Application number: 19170118.4
(22) Date of filing: 24.06.2015
(51) Int. Cl.: H02M 3/158, H02J 9/06

(54) **SINGLE INDUCTOR BATTERY CHARGER FOR PORTABLE ELECTRONIC DEVICES**

(30) Priority: 24.06.2014 US 201462016554 P
(62) Divisional of application: 15734522.4
(71) Applicant: Apple Inc., Cupertino CA 95014 (US)
(72) Inventor: GREENING, Thomas C., Cupertino, CA 95014 (US); LIU, Qing, Cupertino, CA 95014 (US); ATHAS, William C., Cupertino, CA 95014 (US)
(74) Representative: Rooney, John-Paul

(57) **Abstract**

A power conversion circuit for use in a portable electronic device having a battery (322) and one or more electronic subsystems (304, 306), the power conversion circuit comprising: an inductor (308); and a plurality of switching devices (310, 312, 314, 316, 318, 320; 330, 332, 336; 330, 336, 340, 344) configured to: responsive to availability of an input power source (302), operate in conjunction with the inductor (308) as a buck converter to charge the battery (322) from the input power source (302); and responsive to unavailability of the input power source, operate in conjunction with the inductor (308) as a boost converter to power the one or more electronic subsystems (304), (306) from the battery (322).

## Description

### BACKGROUND

### Field

The disclosed embodiments relate to batteries for portable electronic devices. More specifically, the disclosed embodiments relate to techniques for reusing inductors of battery chargers to boost voltages during battery discharge.

### Related Art

A portable electronic device is typically configured to shut down when its battery reaches a predetermined minimum voltage, which may be higher than the lowest operating voltage of the battery. For example, although a lithium-ion battery may be considered empty when the battery voltage reaches 3.0V, certain components of computing device (e.g., the radio and speaker subsystems of a mobile phone or tablet computer) may require a minimum voltage of 3.4V to operate, and the device may be configured to shut down at 3.4V to avoid browning out these components. As a result, the battery may contain unused capacity between 3.0V and 3.4V.

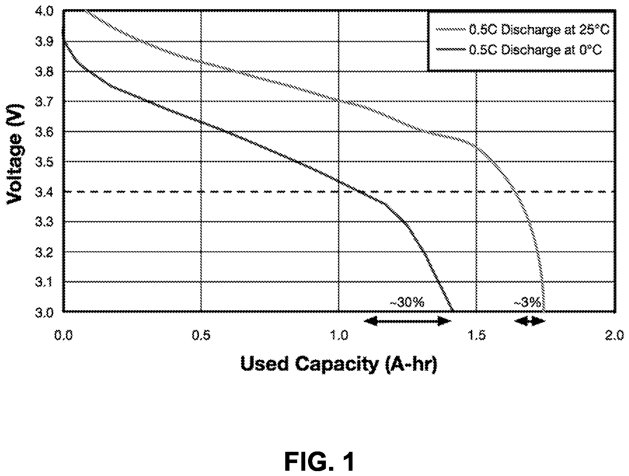

The amount of unused capacity may depend on the load current, temperature and age of the battery. For light loads on warm, fresh batteries, the unused capacity is typically just a few percent of the overall capacity. For colder or older batteries, however, the unused capacity may increase dramatically. For example, FIG. 1 shows an example of batteries discharged at a given load (0.5C load, which is the current required to discharge a battery in two hours) at two different temperatures. As shown there, discharging the battery at 25° C may result in a few percentage of the overall capacity occurring under a cutoff voltage (shown in FIG. 1 as 3.4V), but discharging the battery at 0° C may result in as much as 30% of the overall capacity occurring under the cutoff voltage. Accordingly, it may be desirable to have a system that is able to take advantage of this unused capacity.

### SUMMARY

The disclosed embodiments provide a system that manages use of a battery in a portable electronic device. During operation, the system provides a charging circuit for converting an input voltage from a power source into a set of output voltages for charging the battery and powering a low-voltage subsystem and a high-voltage subsystem in the portable electronic device. Upon detecting discharging of the battery in a low-voltage state, the system uses the charging circuit to directly power the low-voltage subsystem from a battery voltage of the battery and up-convert the battery voltage to power the high-voltage subsystem.

In some embodiments, upon detecting the input voltage from an underpowered power source and the low-voltage state in the battery, the system uses the charging circuit to power the low-voltage subsystem from a target voltage of the battery and power the high-voltage subsystem from the underpowered power source. Moreover, upon detecting a voltage of the low-voltage subsystem below an open-circuit voltage of the battery, the system uses the charging circuit to power the high-voltage subsystem from a sum of currents from the input voltage and the up-converted battery voltage.

In some embodiments, upon detecting the input voltage from an underpowered power source and a high-voltage state in the battery, the system uses the charging circuit to power the low-voltage subsystem and the high-voltage subsystem from a target voltage of the battery that is higher than a voltage requirement of the high-voltage subsystem. Moreover, upon detecting a voltage of the low-voltage subsystem below an open-circuit voltage of the battery, the system uses the charging circuit to power the high-voltage subsystem by summing currents from the input adapter and the up-converted battery voltage.

In some embodiments, upon detecting the input voltage from an underpowered power source and an undervoltage state in the battery, the system powers off the portable electronic device and uses the charging circuit to charge the battery from the input voltage.

In some embodiments, upon detecting the input voltage from the power source and a low-voltage state in the battery, the system uses the charging circuit to:
(i) power the high-voltage subsystem from the power source;
(ii) down-convert the input voltage to a target voltage of the battery; and
(iii) charge the battery and power the low-voltage subsystem from the target voltage.

In some embodiments, upon detecting the input voltage from the power source and a fully charged state in the battery, the system uses the charging circuit to discontinue charging of the battery and power the low-voltage subsystem and the high-voltage subsystem from a target voltage that is higher than the battery voltage of the battery in the fully charged state.

In some embodiments, the charging circuit includes:
(i) an inductor with an input terminal and a load terminal;
(ii) a first switching mechanism configured to couple the input terminal to either the power source or a reference voltage;
(iii) a second switching mechanism configured to couple the load terminal to the battery, the high-voltage subsystem, and the low-voltage subsystem; and
(iv) a third switching mechanism configured to couple the input voltage to the high-voltage subsystem.

In some embodiments, the first, second, and third switching mechanisms include field-effect transistors (FETs).

In some embodiments, the battery voltage in the low-voltage state is lower than a voltage requirement of the high-voltage subsystem.

### BRIEF DESCRIPTION OF THE FIGURES

FIG. 1 shows a plot of voltage versus used capacity for a battery in accordance with the disclosed embodiments.
FIG. 2 shows a standard battery-charging circuit in accordance with the disclosed embodiments.
FIG. 3A shows a charging circuit for a portable electronic device in accordance with the disclosed embodiments.
FIG. 3B shows a charging system for a portable electronic device in accordance with the disclosed embodiments.
FIG. 3C shows a charging circuit for a portable electronic device in accordance with the disclosed embodiments.
FIG. 4 shows a flowchart illustrating the process of managing use of a battery in a portable electronic device in accordance with the disclosed embodiments.
FIG. 5 shows a flowchart illustrating the process of managing use of a battery in a portable electronic device in accordance with the disclosed embodiments.
FIG. 6 shows a flowchart illustrating the process of managing use of a battery in a portable electronic device in accordance with the disclosed embodiments.
FIG. 7 shows a portable electronic device in accordance with the disclosed embodiments.

In the figures, like reference numerals refer to the same figure elements.

### DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing code and/or data now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

The disclosed embodiments provide a method and system for managing use of a battery in a portable electronic device. More specifically, the disclosed embodiments provide a charging circuit that may provide an up-converted voltage to one or more subsystems of the portable electronic device. In some instances, the charging circuit may include a reused inductor for up-converting (*e.g*., boosting) voltages in the portable electronic device. In these instances, the inductor may produce a down-converted voltage when the charging circuit is in a first configuration or set of configurations, and may produce an up-converted voltage when the charging circuit is in a second configuration or set of configurations. The reused inductor may avoid an increase in board space occupied by the charging circuit, thereby allowing unused capacity in the battery to be accessed without reducing the size and/or runtime of the battery.

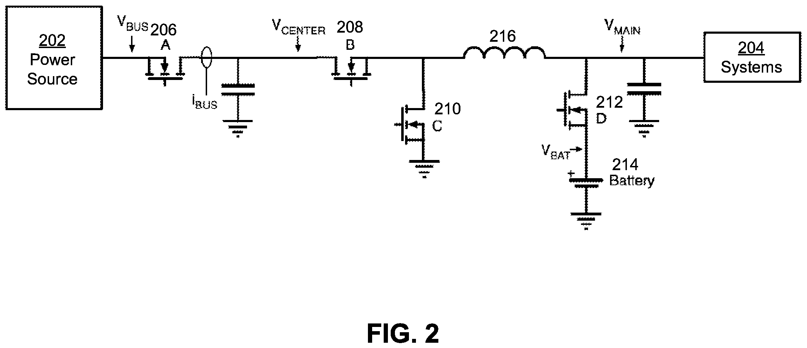

FIG. 2 shows a typical charger circuit for a system that is disabled when the system voltage drops below a minimum operating voltage, such as 3.4V. As shown there, the charger circuit may connect an intermittent power source 202 (e.g., a power adapter), a battery 214, and one or more systems 204 powered by battery 214. In some instances, the system may comprise a connector (not shown) between the intermittent power source and the charger circuit, which may allow the power source 202 to be connected to or disconnected from the charger circuit. Field-effect transistor (FET) A 206 protects against reverse voltage and prevents current from flowing from the battery to the connector (*e.g*., when a power adapter providing power source 202 is not connected to the system). FET B 208 and FET C 210 are alternately switching FETs that, with an inductor 216, form a buck converter that produces a bucked voltage at the output of the inductor V_{MAIN}. If the battery voltage is less than the minimum operating voltage (e.g., 3.4V), V_{MAIN} may be controlled using the buck converter to the minimum operating voltage, and FET D 212 is controlled linearly to lower the voltage at V_{BAT} to a target voltage for charging battery 214. FET D 212 is also disabled to stop charging when battery 214 is full. When the battery 214 is discharging to power the one or more systems 204, FETs B 208 and C 210 stop switching, and FET D 212 is fully turned on to connect battery 214 to the one or more systems 204.

A standard boost converter could be added between battery 214 and systems 204 to boost the battery voltage of battery 214 to or above a minimum operating voltage (e.g., greater than 3.4V) as battery 214 discharges to a cutoff voltage, such as 3.0V. However, this option may be undesirable because the size of the boost converter (especially its inductor) would contribute significantly to the available board space. Taking away board space for a circuit in a space-constrained portable electronic device typically results in a smaller battery size, which in turn may result in shorter runtimes for the portable electronic device. This may offset any capacity gains from boosting the battery voltage to the voltage required by device subsystems. Discussed here are mechanisms for providing boost functionality in a battery-charging circuit without significantly increasing the board space occupied by the battery-charging circuit.

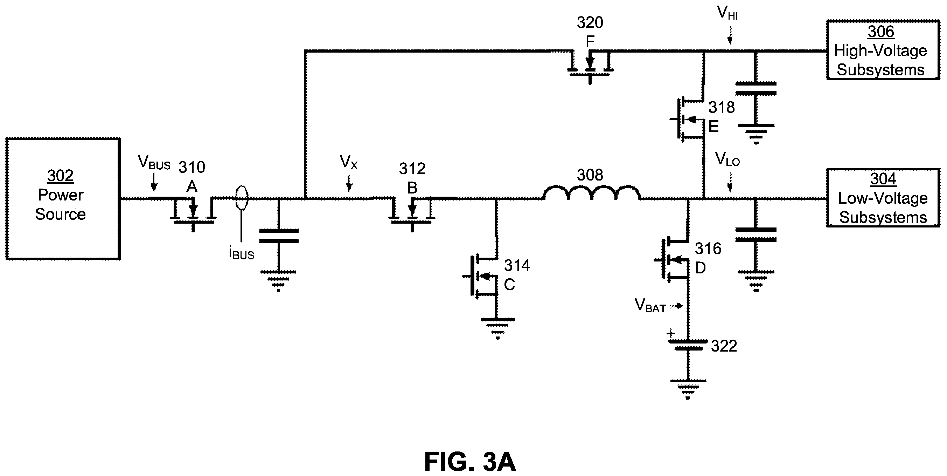

FIG. 3A shows a variation of charging circuit for a portable electronic device in accordance with the disclosed embodiments. For example, FIG. 3A may be used to supply power to components of a laptop computer, tablet computer, mobile phone, digital camera, and/or other battery-powered electronic device. In these variations, the portable electronic device may comprise one or more high-voltage subsystems 306 and one or more low-voltage subsystems 304, which may be powered by a battery 322. The one or more low-voltage subsystems 304 may require a first voltage that is less than a second voltage required by the one or more high-voltage subsystems 306 during operation of the portable electronic device. For example, in some variations the low-voltage subsystems 304 may require a first voltage at or below the cutoff voltage of battery 322 (e.g., 3.0 V), while the high-voltage subsystems 306 may require a second voltage above the cutoff voltage of the battery (e.g., 3.4 V). In other variations, the first voltage required by the one or more low-voltage subsystems 304 may be above the cutoff voltage of battery 322. The charging circuit may provide boost functionality, which may supply power to one or more high-voltage subsystems 306, for example, when the voltage of the battery 322 is below the second voltage. On the other hand, low-voltage subsystems 304 may require significantly less voltage than high-voltage subsystems 306 and/or the cutoff voltage of battery 322, and in some instances may be powered directly by battery 322.

For example, the majority of components in a portable electronic device, including the central processing unit (CPU), graphics-processing unit (GPU), and/or integrated circuit rails, may require voltages much less than an exemplary 3.0V cutoff voltage for battery 322. On the other hand, the radio and speaker subsystems of the portable electronic device may require an exemplary minimum voltage of 3.4V to operate. As a result, subsystems in the portable electronic device may be divided into two or more groups, such as low-voltage subsystems 304 that can be powered from 3.0V, and high-voltage subsystems 306 that require a minimum of 3.4V.

As shown in FIG. 3A, the charging circuit with boost functionality includes an inductor 308 and six FETs 310-320, and may be connected to a power source 302. FET A 310 may be turned on when an identified power source 302 is available and when disabled provides reverse voltage protection from a power source incorrectly designed or connected backwards. FET A 310 is turned off when power source 302 is not available (*e.g*., an external power adapter is not connected) to prevent the portable electronic device from transmitting power to either an unavailable power source 302 or to a connector where a power source may be connected. FETs B 312 and C 314 couple the input terminal of inductor 308 to a voltage node V_{X} and a reference voltage such as ground, respectively. FETs B 312 and C 314 may be switched to selectively couple the input of inductor 308 to voltage node V_{X} or the reference voltage. FET D 316 may couple battery 322 to a voltage node V_{Lo} (which may be connected to the one or more low-voltage subsystems 304 and a load terminal of inductor 308). FET E 318 may couple the voltage node V_{LO} to a voltage node V_{HI} (which may be connected to the one or more high-voltage subsystems 306), or in other variations may couple voltage node V_{HI} directly to battery 322. FET F 320 couples the voltage node V_{X} to the voltage node V_{HI}, which may be used to couple input voltage from power source 302 and/or boosted battery voltage from inductor 308 to high-voltage subsystems 306. By reusing the charging inductor 308 as a boost inductor during discharge of battery 322, the runtime of the portable electronic device may be extended without significantly increasing the required board space.

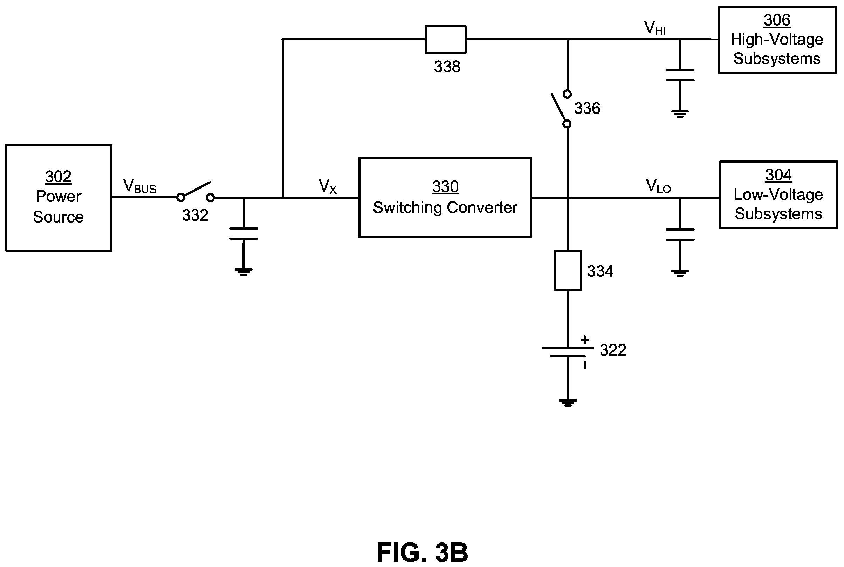

FIG. 3B shows a charging system for a portable electronic device in accordance with the disclosed embodiments. The charging system of FIG. 3B may convert an input voltage from power source 302 and/or a battery voltage from battery 322 into a set of output voltages for charging battery 322 and/or powering one or more low-voltage subsystems 304 and one or more high-voltage subsystems 306.

As shown in FIG. 3B, the charging system includes a switching converter 330. Switching converter 330 may include one or more inductors and a set of switching mechanisms such as FETs, diodes, and/or other electronic switching components. For example, switching converter 330 may be provided by the converter shown in FIG. 3A, which includes inductor 308 with an input terminal and a load terminal and two switching mechanisms (e.g., as provided by FETs 312-314), which are configured to couple the input terminal to either a voltage node V_{X} (which may be connected to an output of power source 308) or a reference voltage (e.g., ground), such as discussed above. The charging system may include switching mechanisms 332 and 336 and regulators 334 and 338, which collectively may be used to couple the output of switching converter 330 to either battery 322, high-voltage subsystems 306, and/or low-voltage subsystems 304 and couple power source 308 to high-voltage subsystems 306. Each switching mechanism may selectively couple different voltage nodes, and may include a switch, a FET (such as FETS 310 and 318 of FIG. 3A), a diode, or the like. Each regulator may selectively controlled to control a voltage at one or more voltage nodes or act as a switch, and may include a FET (such as FETs 316 and 320 of FIG. 3A), a variable resistor, or the like.

For example, switching mechanism 332 may provide reverse voltage protection from an improperly functioning power source 302 (e.g., a power source with a faulty design or incorrectly connected power source 302) and may prevent current flowing from the voltage node V_{X} to the power source 302 (shown there as V_{BUS}). The switching converter 330 may couple voltage node V_{X} with a voltage node V_{LO}, which may in turn be coupled to low-voltage subsystems 304. Regulator 338 may selectively couple voltage node V_{X} with a voltage node V_{HI} either directly or by linearly regulating V_{HI} to a voltage less than V_{X}, which may in turn be coupled to high-voltage subsystems 306. Switching mechanism 336 may selectively couple voltage node V_{HI} with voltage node V_{LO}, or in some instances may selectively couple voltage node V_{HI} with battery 322. Regulator 334 may selectively couple voltage node V_{LO} to battery 322 either directly or by linearly regulating the battery voltage to a voltage less than V_{LO}. The switching mechanisms may be used to control power to the high-voltage subsystems 306 and the low voltage subsystems 304, as will be described in more detail below.

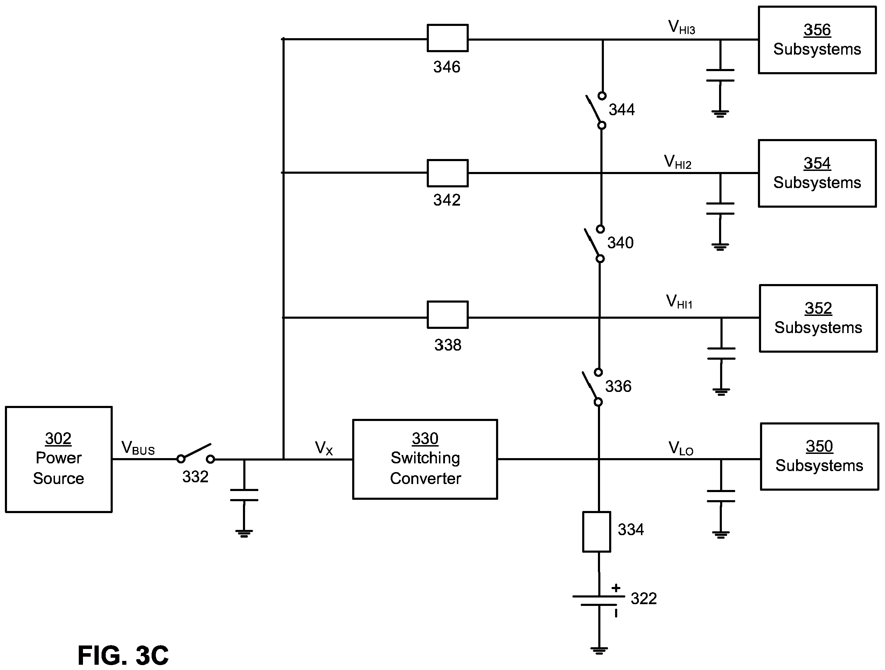

FIG. 3C shows a charging circuit for a portable electronic device in accordance with the disclosed embodiments. The charging circuit may convert an input voltage from power source 302 and/or a battery voltage from battery 322 into a set of output voltages (*e.g*., V_{LO}, V_{HI1}, V_{HI2}, V_{HI3}) for charging battery 322 and/or powering a number of subsystems 350-356 of the portable electronic device with different voltage requirements (while shown there as having four subsystems, the charging circuit may power any number of subsystems having different voltage requirements, such as two, three, four, or five or more subsystems). For example, the charging system may power one or more subsystems with a first voltage requirement (which in some variations is at or below the cutoff voltage of battery 322 (*e.g*., 3.0V)), one or more subsystems with a second voltage requirement that is higher than the first voltage requirement (which may be slightly higher than the cutoff voltage of battery 322 (*e.g*., 3.2V)), one or more subsystems with a third voltage requirement that is higher than the second voltage requirement (*e.g*., 3.4V), and one or more subsystems with the highest voltage requirement in the portable electronic device (*e.g*., a fourth voltage requirement that is higher than the third voltage requirement, such as 3.6V).

As with the charging system of FIG. 3B, the charging system of FIG. 3C includes a switching converter 330, which may be provided by one or more inductors and a set of switching mechanisms such as FETs, diodes, and/or other electronic switching components. Specifically, switching converter 330 may be any type of bidirectional converter, such as a buck converter, a boost converter, an inverting converter, a buck-boost converter, a Ćuk converter, a single-ended primary-inductor converter (SEPICs), and/or a Zeta converter.

Additional switching mechanisms 336, 340, and 344 and regulators 334, 338, 342, and 346 may be used to couple the output of switching converter 330 to battery 322 and subsystems 350-356, power subsystems 350-356 from power source 302 and/or battery 322, and generate output voltages that meet the voltage requirements of subsystems 350-356.

Switching mechanisms 336, 340, and 344 and regulator 334 couple the output of switching converter 330 to battery 322 and subsystems 350-356. As shown in FIG. 3C, regulator 334 may selectively couple battery 322 to voltage node V_{LO} (which may be connected to a load terminal of converter 330 and subsystems 350). Switching mechanism 336 may selectively couple voltage node V_{LO} to voltage node V_{HI1}, which in turn may be connected to subsystems 352. Switching mechanism 340 may selectively couple voltage node V_{HI1} to voltage node V_{HI2}, which in turn may be connected to subsystems 354. Switching mechanism 344 may selectively couple voltage node V_{H2} to voltage node V_{HI3}, which in turn may be connected to subsystems 356. In other variations, each of switching mechanisms 336, 340, and 344 may directly connect battery 322 to subsystems 352, 345, and 356 respectively.

Regulators 338, 342, and 346 couple voltage node V_{X} (which in turn may provide the input voltage from power source 302 and/or boosted battery voltage from switching converter 330) to subsystems 352-356, respectively, either directly or by linearly regulating to a voltage less than V_{X}. For example, as shown in FIG. 3C, regulator 338 may selectively couple voltage node Vx with voltage node V_{HI1} and subsystem 352 either directly or by linearly regulating to a voltage V_{HI1} less than V_{X}. Regulator 342 may selectively couple voltage node Vx with voltage node V_{HI2} and subsystem 354 either directly or by linearly regulating to a voltage V_{HI2} less than V_{X}. Regulator 346 may selectively couple voltage node Vx with voltage node V_{HI3} and subsystem 356 either directly or by linearly regulating to a voltage V_{HI3} less than V_{X}.

During operation of the charging system, there are three charging power source 302 states to consider: standard charging from power source 302, charging with an underpowered power source 302, and discharging from battery 322. An underpowered power source is any power source (*e.g*., power source 302) that cannot provide the desired power to the system by reaching the adapter current i_{BUS} or adapter voltage V_{BUS} limits. For example, power source 302 may be underpowered if current i_{BUS} or V_{BUS} limits are designed for AC mains electricity with voltages of 100-240V but power source 302 is plugged into a power source with a lower current or voltage than the i_{BUS} or V_{BUS} limits, such as a Universal Serial Bus (USB) port on a computer system.

Similarly, there are four or more battery voltage states to consider: an undervoltage state, one or more low-voltage state, a high-voltage state, and a fully charged state. Battery 322 is considered undervoltage if the battery voltage of battery 322 is less than or equal to a designated cutoff voltage (*e.g*. a minimum operating voltage) of the battery (*e.g*., 3.0V), and battery 322 has no useful remaining charge. A low-voltage battery 322 may have a battery voltage that can be used directly by low-voltage subsystems 304 but not high-voltage subsystems 306 (*e.g*., between 3.0V and 3.4V). A high-voltage battery 322 may have a voltage that can be used directly by all subsystems (*e.g*., greater than 3.4V), but is not yet fully charged. A fully charged battery 322 may be at the maximum voltage of battery 322 and thus cannot be charged any further. In instances where the device has three or more subsystems having different voltage requirements, such as shown in FIG. 3C, the battery may have multiple low-voltage states (e.g., a first low-voltage state where the battery voltage is high enough to power subsystems 350 but not subsystems 352-356, a second low-voltage state where the battery is high enough to power subsystems 350 and 352 but not subsystems 354 and 356, and a third low-voltage state where the battery is high enough to power subsystems 352-354 but not subsystems 356).

The combination of adapter states and battery 322 voltage states gives 12 unique states to consider. The following sections describe the detailed operations of the charging systems of FIGs. 3A-3B for each of these states.

### State 1: Standard Charging with an Undervoltage Battery

During standard charging with an undervoltage battery 322, the control circuit may use power source 302 to charge battery 322. The control circuit may also use switching converter 330 to convert the input voltage from power source 302 into one or more output voltages for powering the subsystems. In these instances, the input voltage of the power source may be used to provide a charging voltage to the battery and a voltage to each subsystem that meets the required voltage for that subsystem.

For example, in the charging circuit shown in FIG. 3A, the control circuit may configure the charging circuit to perform standard charging with an undervoltage battery 322 in the following way. A power source 302 (which may be a direct current (DC) source) is connected to the enabled FET A 310. FET B 312 is switching as part of a servo mechanism feedback loop (*e.g*., implemented in the control circuit) that controls voltage node V_{LO} (*e.g*., the voltage of low-voltage subsystems 304) to a voltage that is sufficient to power the low-voltage subsystems (*e.g*., which may be the cutoff voltage of battery 322 (*e.g*., 3.0V)), unless restricted by limits on the adapter current i_{BUS} or the adapter voltage V_{BUS}. FET C 314 is switching in a complementary fashion with FET B 312. FET D 316 may operate linearly to control V_{BAT} to a target voltage for charging the battery 322, which may be less than 3.0V. FET E 318 may operate as an ideal diode and may be turned off in this state. FET F 320 may be activated to provide a voltage to voltage node V_{HI} that is sufficient to power the one or more high-voltage subsystems 306. In some instances, FET F 320 may operating linearly to keep the voltage node V_{HI} of high-voltage subsystems 306 equal to V_{HI_MAX}, which is a voltage that is as close to the input voltage from power source 302 as possible without exceeding the maximum voltage limits of high-voltage subsystems 306. Low-voltage subsystems 304 are powered at a first voltage

(e.g., at the cutoff voltage of battery 322 (*e.g*., 3.0V), while high-voltage subsystems 306 are at V_{HI_MAX} powered from power source 302 via FET F 320.

### State 2: Standard Charging with a Low-Voltage Battery

During standard charging with a low-voltage battery, the control circuit may use power source 302 to charge battery 322. The control circuit may also use switching converter 330 to convert the input voltage from power source 302 into one or more output voltages for powering the subsystems, which may include a target voltage of battery 322. In these instances, the input voltage of the power source may be used to provide a charging voltage to the battery and a voltage to each subsystem that meets the required voltage for that subsystem.

For example, the control circuit may configure the charging circuit of FIG. 3A to perform standard charging with a low-voltage battery 322 in the following way. A power source 302 (e.g., a DC voltage power source) is connected to the enabled FET A 310. FET B 312 is switching as part of a servo mechanism feedback loop (*e.g*., implemented in the control circuit) that controls V_{LO} to a target voltage that is between the voltage requirement for the low-voltage subsystems 304 (which may be the cutoff voltage of battery 322 (*e.g*., 3.0V)) and the voltage required by high-voltage subsystems 306 (*e.g*., 3.4V), unless restricted by limits on the adapter current i_{BUS} or the adapter voltage V_{BUS}. FET C 314 is switching in a complementary fashion with FET B 312, allowing current to flow in either direction. FET D 316 is fully on such that V_{BAT} and V_{LO} are both at the target voltage. FET E 318 may operate as an ideal diode and may be off in this state. FET F 320 may be activated to provide a voltage to voltage node V_{HI} that is sufficient to power the one or more high-voltage subsystems 306. In some instances, FET F 320 is operating linearly to keep V_{HI} equal to V_{H_ MAX} as discussed above. Low-voltage subsystems 304 are at the target voltage (*e.g*., 3.0-3.4V) of battery 322 powered by the buck converter (*e.g*., FETs B-C 312-314 and inductor 308), while high-voltage subsystems 306 are at V_{HI_MAX} powered from power source 302 via FET F 320.

To improve efficiency, FET C 314 could instead be configured to operate as an ideal diode and prevent current from flowing into ground (*e.g*., a reference voltage). If the servo mechanism (*e.g*., the control circuit) suddenly becomes adapter-limited, causing a transition to charging with an underpowered power source and a low-voltage battery as discussed in State 6 below, then FET C 314 may no longer be configured as an ideal diode and may instead be switching in a complementary fashion with FET B 312, allowing current to be boosted from battery 322.

### State 3: Standard Charging with a High-Voltage Battery

During standard charging with a high-voltage battery, the control circuit may use power source 302 to charge battery 322. The control circuit may also use switching converter 330 to convert the input voltage from power source 302 into a target voltage of battery 322, which is also used to power one or more subsystems of the portable electronic device. In these instances, the input voltage of the power source may be used to provide a charging voltage to the battery and a voltage to each subsystem that meets the required voltage for that subsystem.

For example, the control circuit may configure the charging circuit of FIG. 3A to perform standard charging with a high-voltage battery 322 in the following way. Power source 302 is connected to the enabled FET A 310. FET B 312 is switching as part of a servo mechanism feedback loop (*e.g*., implemented in the control circuit) that controls V_{LO} to a target voltage that is greater than the voltage requirement of high-voltage subsystems 306 (*e.g*., 3.4V), unless restricted by limits on the adapter current i_{BUS} or the adapter voltage V_{BUS}. FET C 314 is switching in a complementary fashion with FET B 312, allowing current to flow in either direction. FET D 316 is fully on such that V_{BAT} and V_{LO} are both at the target voltage. FET E 318 may be on (and may be operating as an ideal diode) such that V_{HI} equal to V_{LO}. FET F 320 may also be on (e.g., operating linearly) to keep V_{HI} at or above the voltage requirement of high-voltage subsystems 306, but switches off as V_{HI} is driven greater than the voltage requirement by the enabled FET E 318. Both high-voltage subsystems 306 and low-voltage subsystems 304 are at the battery target voltage powered by the buck converter.

As discussed in State 2 (Standard Charging with a Low-Voltage Battery), FET C 314 could instead be configured to operate as an ideal diode to improve efficiency at the expense of being able to react quickly to a transition to charging with an underpowered power source and a high-voltage battery, which is discussed in State 7 below.

### State 4: Standard Charging with a Fully Charged Battery

During standard charging with a fully charged battery, the control circuit may discontinue charging of battery 322 from power source 302. The control circuit may also use switching converter 330 to convert the input voltage from power source 302 into an output voltage for powering the subsystems of the portable electronic device. The output voltage may be higher than the battery voltage of battery 322 in the fully charged state.

For example, the control circuit may configure the charging circuit of FIG. 3A to perform standard charging with a fully charged battery 322 in the following way. Power source 302 is connected to the enabled FET A 310. FET B 312 is switching as part of a servo mechanism feedback loop (*e.g*., implemented in the control circuit) that controls V_{LO} to a target voltage that is sufficient to power the low-voltage subsystem 304. In some variations, this voltage is configured to be greater (*e.g*., by 100 mV) than the fully charged voltage of battery 322, unless restricted by limits on the adapter current i_{BUS} or the adapter voltage V_{BUS}. This may provide voltage headroom for current pulses without needing to discharge the battery. FET C 314 is switching in a complementary fashion with FET B 312, allowing current to flow in either direction. FET D 316 may be off and may operate as an ideal diode, preventing battery 322 from charging. FET E 318 is operating as an ideal diode and is on in this state, with V_{HI} equal to V_{LO}. FET F 320 is operating linearly to keep V_{HI} at or above the voltage requirement of high-voltage subsystems 306, but switches off as V_{HI} is driven greater than the voltage requirement by the enabled FET E 318. Both high-voltage subsystems 306 and low-voltage subsystems 304 are at the target voltage powered by the buck converter, which is greater than the voltage requirement of high-voltage subsystems 306.

As discussed in State 2 (Standard Charging with a Low-Voltage Battery), FET C 314 could instead be configured to operate as an ideal diode to improve efficiency at the expense of being able to react quickly to a transition to charging with an underpowered power source and a fully charged battery, which is discussed in State 8 below.

### State 5: Charging with an Underpowered Power Source and an Undervoltage Battery

During charging with an underpowered power source 302 and an undervoltage battery 322, the control circuit may power off the portable electronic device and use all of the limited power from power source 302 to charge battery 322. For example, the control circuit may configure the charging circuit of FIG. 3A to perform charging with an underpowered power source 320 and an undervoltage battery 322 in the following way. A power source 302 (e.g., a DC voltage power source) is connected to the enabled FET A 310. FET B 312 is switching as part of a servo mechanism feedback loop (*e.g*., implemented in the control circuit) that tries to control V_{LO} to the cutoff voltage of battery 322 (*e.g*., 3.0V), but is instead restricted by limits on the adapter current i_{BUS} or the adapter voltage V_{BUS}. FET C 314 is switching in a complementary fashion with FET B 312. FET D 316 is operating linearly to control V_{BAT} to a target voltage that is less than the cutoff voltage of battery 322 (*e.g*., 3.0V). FET E 318 is operating as an ideal diode and is off in this state. FET F 320 is operating linearly to keep V_{HI} equal to V_{HI_MAX}. Low-voltage subsystems 304 are at less than the cutoff voltage of battery 322 (*e.g*., 3.0V) powered by the buck converter, while high-voltage subsystems 306 are at V_{HI_MAX} powered from power source 302 via FET F 320 operating linearly. Since V_{LO} is below the cutoff voltage of battery 322, the system is turned off and no current pulses on either high-voltage subsystems 306 or low-voltage subsystems 304 need to be considered. All of the limited adapter power will go into charging the battery until the charging circuit transitions into State 1 (Standard Charging with an Undervoltage Battery) or State 6 (Charging with an Underpowered Power Source and a Low-Voltage Battery).

### State 6: Charging with an Underpowered Power Source and a Low-Voltage Battery

During charging with an underpowered power source 302 and a low-voltage battery 322, the control circuit may power the low-voltage subsystem from a target voltage of the battery and power the high-voltage subsystem from the underpowered power source 302. If the control circuit detects a voltage of the low-voltage subsystem below an open-circuit voltage of battery 322, the control circuit may power the high-voltage subsystem from a sum of currents from the input voltage and the up-converted battery voltage from switching converter 330.

For example, the control circuit may configure the charging circuit of FIG. 3A to perform charging with an underpowered power source 302 and a low-voltage battery 322 in the following way. Power source 302 is connected to the enabled FET A 310. FET B 312 is switching as part of a servo mechanism feedback loop (*e.g*., implemented in the control circuit) that tries to control V_{LO} to a target voltage that is between the cutoff voltage of battery 322 (*e.g*., 3.0V) and the voltage required by high-voltage subsystems 306 (*e.g*., 3.4V), but is instead restricted by limits on the adapter current i_{BUS} or the adapter voltage V_{BUS}. FET C 314 is switching in a complementary fashion with FET B 312, allowing current to flow in either direction. FET D 316 is fully on such that V_{BAT} and V_{LO} are both at the target voltage. FET E 318 is operating as an ideal diode and is off in this state. FET F 320 is operating linearly to keep V_{HI} equal to V_{HI_MAX}. Low-voltage subsystems 304 are below the target voltage of battery 322 powered by the buck converter, while high-voltage subsystems 306 are at V_{HI_MAX} powered from power source 302 via FET F 320 operating linearly.

If V_{LO} is below the open-circuit voltage of battery 322, then battery 322 will be discharging instead of charging. In this case, charge is boosted from the battery at V_{LO} by inductor 308 and switching FETs B 312 and C 314 to V_{X}. Low-voltage subsystems 304 may be powered by battery 322, and high-voltage subsystems 306 may be powered by the sum of currents from the adapter power and the boosted battery power at V_{HI_MAX} controlled via FET F 320 operating linearly.

### State 7: Charging with an Underpowered Power Source and a High-Voltage Battery

During charging with an underpowered power source 302 and a high-voltage battery 322, the control circuit may power the low-voltage subsystem and the high-voltage subsystem from a target voltage of battery 322 that is higher than a voltage requirement of the high-voltage subsystem. If the control circuit detects a voltage of the low-voltage subsystem below an open-circuit voltage of battery 322, the control circuit may power the power the low-voltage subsystem and the high-voltage subsystem from a sum of currents from the input voltage and the up-converted battery voltage from switching converter 330.

For example, the control circuit may configure the charging circuit of FIG. 3A to perform charging with an underpowered power source 302 and a high-voltage battery 322 in the following way. Power source 302 is connected to the enabled FET A 310. FET B 312 is switching as part of a servo mechanism feedback loop (*e.g*., implemented in the control circuit) that tries to control V_{LO} to a target voltage that is greater than the voltage required by high-voltage subsystems 306 (*e.g*., 3.4V), but is instead restricted by limits on the adapter current i_{BUS} or the adapter voltage V_{BUS}. FET C 314 is switching in a complementary fashion with FET B 312, allowing current to flow in either direction. FET D 316 is fully on such that V_{BAT} and V_{LO} are both at the target voltage. FET E 318 is operating as an ideal diode and is on in this state, with V_{HI} equal to V_{LO}. FET F 320 is operating linearly to keep V_{HI} at or above the voltage requirement of high-voltage subsystems 306, but switches off as V_{HI} is driven greater than the voltage requirement by the enabled FET E 318. Both high-voltage subsystems 306 and low-voltage subsystems 304 are at a voltage that is greater than the voltage requirement of high-voltage subsystems 306 powered by the buck converter.

If V_{LO} is below the open-circuit voltage of battery 322, then battery 322 will be discharging instead of charging. In this case, high-voltage subsystems 306 may be powered by power source 302 via the buck converter, supplemented by current from battery 322.

### State 8: Charging with an Underpowered Power Source and a Fully Charged Battery

During charging with an underpowered power source 302 and a fully charged battery 322, the control circuit may discontinue charging of battery 322 from power source 302. The control circuit may also use switching converter 330 to generate an output voltage that powers all subsystems in the portable electronic device. If the output voltage is less than the battery voltage of battery 322, the control circuit may supplement the output voltage with power from battery 322.

For example, the control circuit may configure the charging circuit of FIG. 3A to perform charging with an underpowered power source 302 and a fully charged battery 322 in the following way. Power source 302 is connected to the enabled FET A 310. FET B 312 is switching as part of a servo mechanism feedback loop (*e.g*., implemented in the control circuit) that controls V_{LO} to a target voltage that is greater (*e.g*., by 100 mV) than the fully charged voltage of battery 322, but is instead restricted by limits on the adapter current i_{BUS} or the adapter voltage V_{BUS}. FET C 314 is switching in a complementary fashion with FET B 312, allowing current to flow in either direction. FET D 316 is operating as an ideal diode and is off in this state, preventing battery 322 from charging. FET E 318 is operating as an ideal diode and is on in this state, with V_{HI} equal to V_{LO}. FET F 320 is operating linearly to keep V_{HI} at or above the voltage requirement of high-voltage subsystems 306, but switches off as V_{HI} is driven greater than the voltage requirement by the enabled FET E 318. Both high-voltage subsystems 306 and low-voltage subsystems 304 are at the maximum voltage that the buck converter can provide.

If the buck converter voltage is less than the battery voltage, then FET D 316 conducts as an ideal diode, allowing the battery power to supplement the adapter power, just like State 7 (Charging with an Underpowered Power Source and a High-Voltage Battery).

### State 9: Discharging with an Undervoltage Battery

During discharging with an undervoltage battery 322, there is no useful power in the system, and the portable electronic device is switched off. For example, all FETs 310-320 in the charging circuit of FIG. 3A may be disabled, awaiting detection of power source 302.

### State 10: Discharging with a Low-Voltage Battery

During discharging with a low-voltage battery, the control circuit may directly power the low-voltage subsystem from a battery voltage of battery 322 and up-convert the battery voltage to power the high-voltage subsystem. For example, the control circuit may configure the charging circuit of FIG. 3A to discharge a low-voltage battery 322 in the following way. FET A 310 is disabled to prevent current from reaching the unconnected adapter plug. FET C 314 is switching as part of a servo mechanism feedback loop (*e.g*., implemented in the control circuit), in a boost configuration, that controls V_{X} to the voltage requirement of high-voltage subsystems 306 (*e.g.,* 3.4V). FET B 312 is operating as an ideal diode, switching in a complementary fashion with FET C 314. FET D 316 is operating as an ideal diode and is fully on. FET E 318 is operating as an ideal diode and is fully off. FET F 320 is operating linearly to keep V_{HI} equal to the voltage requirement of high-voltage subsystems 306 (*e.g*., 3.4V) and is fully on. Low-voltage subsystems 304 are directly powered by battery 322, with a voltage between the cutoff voltage of battery 322 (*e.g*., 3.0V) and the voltage requirement of high-voltage subsystems 306 (*e.g*., 3.4V). High-voltage subsystems 306 are powered by the battery voltage boosted to the voltage requirement of high-voltage subsystems 306 (*e.g*., 3.4V) by the charging buck converter running in reverse.

### State 11: Discharging with a High-Voltage Battery

During discharging with a low-voltage battery, the control circuit may directly power all subsystems from the battery voltage of battery 322. For example, the control circuit may configure the charging circuit of FIG. 3A to discharge a high-voltage battery 322 in the following way. FET A 310 is disabled to prevent current from reaching the unconnected adapter plug. FET B 312 is operating as an ideal diode, and is on when FET C 314 is off, keeping V_{X} equal to V_{LO}. FET C 314 is switching as part of a servo mechanism feedback loop (*e.g*., implemented in the control circuit), in a boost configuration, that controls V_{X} to the voltage requirement of high-voltage subsystems 306 (*e.g*., 3.4V), and is typically off since V_{X} will typically be at V_{LO}, which is greater than 3.4V. Both FETs D 316 and E 318 are operating as ideal diodes and are fully on. FET F 320 is operating linearly to keep V_{HI} at or above the voltage requirement of high-voltage subsystems 306, but switches off as V_{HI} is driven higher than the voltage requirement by the enabled FET E 318. Both high-voltage subsystems 306 and low-voltage subsystems 304 are directly connected to the battery voltage, which is greater than the voltage requirement of either subsystem.

### State 12: Discharging with a Fully Charged Battery

The conditions are identical to State 11, which describes discharging with a high-voltage battery.

### Charger Transitions

Transitions between the states occur as the voltage of battery 322 voltage, power source 302 is plugged in or is unplugged, or a large current transient occurs on one of the system loads. The proposed charger gracefully handles these transitions, with the certain transitions described in detail here.

A typical transition occurs when transitioning between a high-voltage battery 322 and a low-voltage battery 322. In this case, the voltage for high-voltage subsystems 306 V_{HI} will transition from the minimum high-voltage level for high-voltage subsystems 306 (*e.g*., 3.4V) to V_{HI_MAX} powered via FET F 320. This transition is simply reversed when charging versus discharging, with the only difference being the source of power for high-voltage subsystems 306. Transitioning in either direction from high to low voltage is smooth and only requires a small level of hysteresis to prevent bouncing between the two states.

A more challenging transition occurs when a current pulse occurs on the high-voltage systems, with the system in State 2 (Charging with a Low-Voltage Battery). In this case, the power to the high-voltage systems is provided by FET F 320 operating linearly to maintain V_{HI} at V_{HI_MAX}. It may be desirable for FET F 320 to provide linear control with high bandwidth to prevent the V_{HI} voltage node from drooping too low. Additionally, setting V_{HI} target voltage to the highest possible voltage (V_{HI_MAX}) may provide voltage headroom for current surges without browning out high-voltage subsystems 306. Additionally, it may be desirable to limit the number of systems and/or current loads required to be in high-voltage subsystems 306, with as many systems as possible put with low-voltage subsystems 304.

If the current pulse on high-voltage subsystems 306 is so large that the buck servo mechanism becomes limited by the adapter current or adapter voltage, then the power to high-voltage subsystems 306 may be supplemented by up converting the battery voltage described by State 6 (Charging with an Underpowered Power Source and a Low-Voltage Battery).

In other instances, a current pulse on high-voltage subsystems 306, in State 11 (Discharging with a High-Voltage Battery), may cause a transition to State 10 (Discharging with a Low-Voltage Battery) due to the pulse-incurred voltage droop on the V_{LO} rail. Before the pulse, high-voltage subsystems 306 are directly connected to battery 322, and the V_{X} voltage is also equal to the battery voltage due to the operation of FET B 312 as an ideal diode. When the pulse occurs, FET F 320, which is operating linearly to keep V_{HI} above the voltage requirement of high-voltage subsystems 306 (*e.g*., 3.4V), will transfer charge from V_{X} to V_{HI}, as the boost servo mechanism controlling FET C 314 begins switching to keep V_{X} at 3.4V.

In still other instances, disconnection of power source 302 during State 2 (Charging with a Low-Voltage Battery) may result in a transition to State 10 (Discharging with a Low-Voltage Battery). In this case, FETs B 312 and C 314 are originally switching as a buck converter to charge battery 322 connected to V_{LO} via FET D 316 to a voltage between the cutoff voltage of battery 322 (*e.g*., 3.0V) and the voltage requirement of high-voltage subsystems 306 (*e.g*., 3.4V). After the unplug event, the current through inductor 308 may need to reverse direction as quickly as possible, as FETs B 312 and C 314 are now switching as a boost converter to control V_{HI} to V_{HI_MAX}. Before the unplug event, the V_{HI} voltage may be controlled to V_{HI_MAX}, via FET F 320 operating linearly, to provide voltage headroom for the current to turn around before the V_{HI} voltage droops below the voltage requirement of high-voltage subsystems 306. Selection of the inductor 308 value, the switching frequency, and the V_{HI} capacitance may help to limit the voltage droop in these cases.

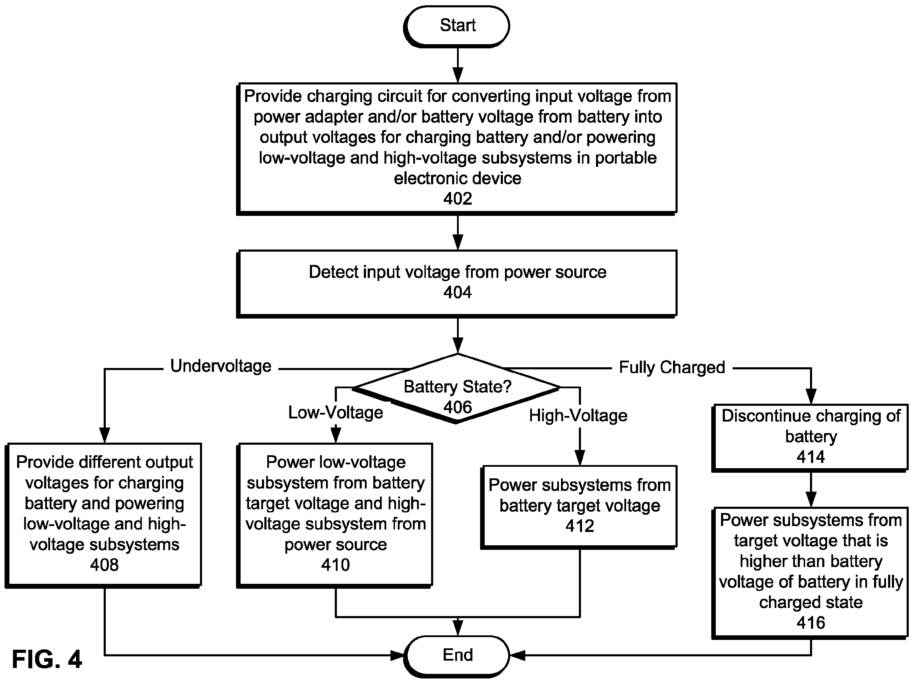

FIG. 4 shows a flowchart illustrating the process of managing use of a battery in a portable electronic device in accordance with the disclosed embodiments. In one or more embodiments, one or more of the steps may be omitted, repeated, and/or performed in a different order. Accordingly, the specific arrangement of steps shown in FIG. 4 should not be construed as limiting the scope of the embodiments.

Initially, a charging circuit for converting an input voltage from a power source and/or a battery voltage from a battery into a set of output voltages for charging the battery and powering a low-voltage subsystem and a high-voltage subsystem in the portable electronic device is provided (operation 402). The charging circuit may include a bidirectional converter and a control circuit. The bidirectional converter may include an inductor with an input terminal and a load terminal and three switching mechanisms, which are configured to couple the input terminal to either the power source or a reference voltage; couple the load terminal to the battery, the high-voltage subsystem, and the low-voltage subsystem; and couple the input voltage to the high-voltage subsystem. The switching mechanisms may be provided by FETs and/or other switching components. Alternatively, other types of bidirectional converters, such as Ćuk converters, inverting converters, boost converters, single-ended primary-inductor converters (SEPICs), Zeta converters, and/or buck-boost converters, may be used.

Next, the input voltage from the power source is detected (operation 404). For example, the input voltage may be detected from a power source that is plugged in to a power outlet. The charging circuit may then be operated based on the battery state (operation 406) of the battery in the portable electronic device. If the battery is in an undervoltage state, the charging circuit is used to provide different output voltages for charging the battery and powering the low-voltage and high-voltage subsystems (operation 408). For example, the charging circuit may produce a target voltage for charging the battery that is less than the cutoff voltage of the battery, a down-converted voltage (*e.g*., a bucked voltage) for powering the low-voltage subsystem at or above the cutoff voltage, and a higher voltage from the power source for powering the high-voltage subsystem at or above the voltage requirement of the high-voltage subsystem.

If the battery is in a low-voltage state, the charging circuit is used to power the low-voltage subsystem from the target voltage of the battery and the high-voltage subsystem from the power source (operation 410). For example, the target voltage may be between the cutoff voltage of the battery (*e.g*., 3.0V) and the voltage requirement of the high-voltage subsystem, and the high-voltage subsystem may be powered from a voltage that is less than or equal to the maximum voltage limit of the high-voltage subsystem.

If the battery is in a high-voltage state, the charging circuit is used to power all subsystems from the target voltage of the battery (operation 412). For example, the same target voltage may be used to power both the low-voltage and high-voltage subsystems and charge the battery.

Finally, if the battery is in a fully charged state, charging of the battery is discontinued (operation 414), and both subsystems are powered from a target voltage that is higher than the battery voltage of the battery in the fully charged state (operation 416). For example, the charging circuit may be used to convert the input voltage into a target voltage that is 100 mV higher than the battery's fully charged voltage to provide voltage headroom and avoid discharging of the battery during current pulses.

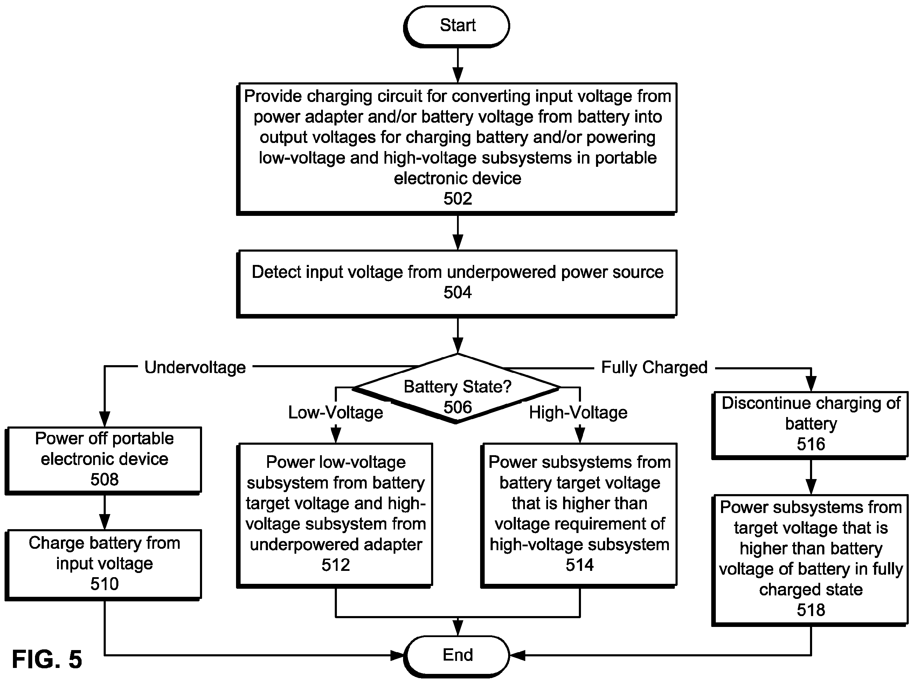

FIG. 5 shows a flowchart illustrating the process of managing use of a battery in a portable electronic device in accordance with the disclosed embodiments. In one or more embodiments, one or more of the steps may be omitted, repeated, and/or performed in a different order. Accordingly, the specific arrangement of steps shown in FIG. 5 should not be construed as limiting the scope of the embodiments.

Initially, a charging circuit for converting an input voltage from a power source and/or a battery voltage from a battery into a set of output voltages for charging the battery and powering a low-voltage subsystem and a high-voltage subsystem in the portable electronic device is provided (operation 502). Next, the input voltage from an underpowered power source is detected (operation 504). For example, the input voltage may be detected from a power source (*e.g*., a power adapter) that is plugged in to a USB port on a computer system and/or other portable electronic device. Alternatively, the power source may be temporarily underpowered during a current pulse on one or both subsystems.

The charging circuit may then be operated based on the battery state (operation 506) of the battery in the portable electronic device. If the battery is in an undervoltage state, the portable electronic device is powered off (operation 508), and the charging circuit is used to charge the battery from the input voltage (operation 510). The portable electronic device may remain off until the charging circuit transitions into standard charging from a power source and/or the battery transitions into a low-voltage state.

If the battery is in a low-voltage state, the charging circuit is used to power the low-voltage subsystem from the target voltage of the battery and the high-voltage subsystem from the underpowered power source (operation 512). For example, the target voltage may be up-converted (*e.g*., boosted) by the charging circuit to power the high-voltage subsystems. Moreover, if the voltage of the low-voltage subsystem is below the open-circuit voltage of the battery, the charging circuit may be used to power the high-voltage subsystem from a sum of currents from the input voltage from the underpowered power source and the up-converted battery voltage.

If the battery is in a high-voltage state, the charging circuit is used to power both subsystems from a target voltage of the battery that is higher than the voltage requirement of the high-voltage subsystem (operation 514). For example, the charging circuit may produce the same target voltage to charge the battery and power both subsystems. In addition, if the voltage of the low-voltage subsystem is below the open-circuit voltage of the battery, the charging circuit may be used to power the high-voltage subsystem from a sum of currents from the input voltage from the underpowered power source and the up-converted battery voltage.

If the battery is in a fully charged state, charging of the battery is discontinued (operation 516), and both subsystems are powered from a target voltage that is higher than the battery voltage of the battery in the fully charged state (operation 518). As with charging in the high-voltage state, if the voltage of the low-voltage subsystem is below the open-circuit voltage of the battery, power from the power source may be supplemented by battery power.

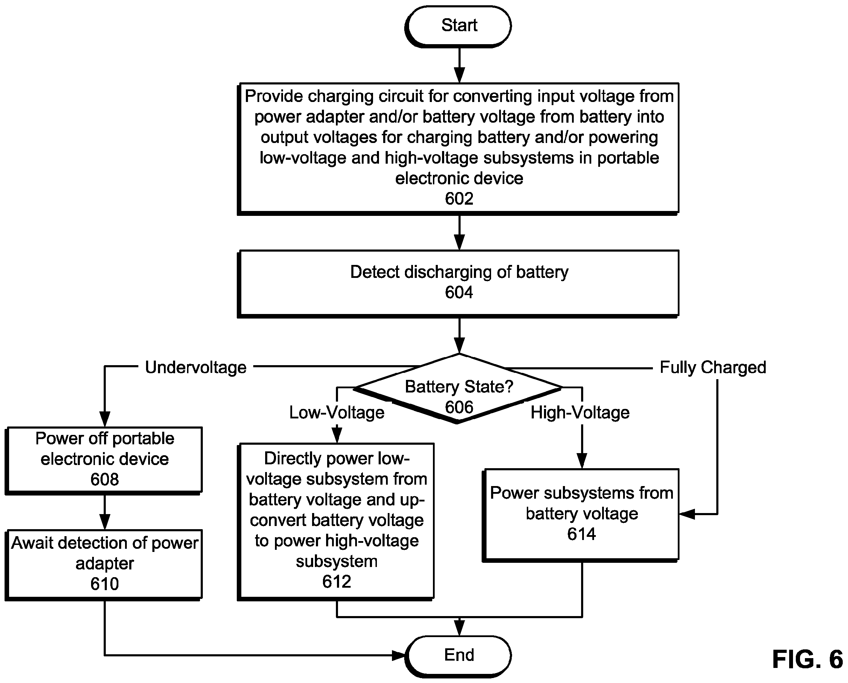

FIG. 6 shows a flowchart illustrating the process of managing use of a battery in a portable electronic device in accordance with the disclosed embodiments. In one or more embodiments, one or more of the steps may be omitted, repeated, and/or performed in a different order. Accordingly, the specific arrangement of steps shown in FIG. 6 should not be construed as limiting the scope of the embodiments.

As with the flowcharts of FIGs. 4-5, a charging circuit for converting an input voltage from a power source and/or a battery voltage from a battery into a set of output voltages for charging the battery and powering a low-voltage subsystem and a high-voltage subsystem in the portable electronic device is provided (operation 602). Next, discharging of the battery is detected (operation 604). For example, the battery may be discharging if no power source is connected to the portable electronic device.

The charging circuit may be operated based on the battery state (operation 606) of the battery in the portable electronic device. If the battery is in an undervoltage state, the portable electronic device is powered off (operation 608), and detection of the power source is awaited (operation 610) because there is no useful power in the portable electronic device.

If the battery is in a low-voltage state, the charging circuit is used to directly power the low-voltage subsystem from the battery voltage and up-convert the battery voltage to power the high-voltage subsystem (operation 612). For example, the low-voltage subsystem may be powered from the battery voltage, which is between the cutoff voltage of the battery and the voltage requirement of the high-voltage subsystem, and the high-voltage subsystem may be powered by up-converting the battery voltage to a voltage that is higher than the voltage requirement.

Finally, if the battery is in a high-voltage state or a fully charged state, both subsystems are powered from the battery voltage (operation 614). For example, the battery voltage may be higher than the voltage requirement of the high-voltage subsystem, thus enabling direct powering of both the high-voltage subsystem and the low-voltage subsystem from the battery voltage without requiring additional up-converting of the battery voltage.

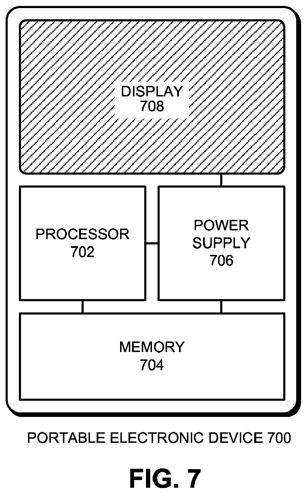

The above-described charging circuit can generally be used in any type of electronic device. For example, FIG. 7 illustrates a portable electronic device 700 which includes a processor 702, a memory 704 and a display 708, which are all powered by a power supply 706. Portable electronic device 700 may correspond to a laptop computer, tablet computer, mobile phone, portable media player, digital camera, and/or other type of battery-powered electronic device. Power supply 706 may include a bidirectional converter such as the converter shown in FIG. 3, a boost converter, an inverting converter, a Ćuk converter, a SEPIC, a Zeta converter, and/or a buck-boost converter. Power supply 706 may also include a control circuit that uses the bidirectional converter to convert an input voltage from a power source and/or a battery voltage from a battery in portable electronic device 700 into a set of output voltages for charging the battery and powering two or more subsystems in portable electronic device 700, including a low-voltage subsystem and a high-voltage subsystem.

The foregoing descriptions of various embodiments have been presented only for purposes of illustration and description. They are not intended to be exhaustive or to limit the present invention to the forms disclosed. Accordingly, many modifications and variations will be apparent to practitioners skilled in the art. Additionally, the above disclosure is not intended to limit the present invention.

### Additional Statements (corresponding to the original claims)

There is also provided the following:
A method for managing use of a battery in a portable electronic device, comprising: providing a charging circuit for converting an input voltage from a power source into a set of output voltages for charging the battery and powering a low-voltage subsystem and a high-voltage subsystem in the portable electronic device; and upon detecting discharging of the battery in a low-voltage state, using the charging circuit to: directly power the low-voltage subsystem from a battery voltage of the battery; and up-convert the battery voltage to power the high-voltage subsystem.

The method optionally further comprising: upon detecting the input voltage from an underpowered power source and the low-voltage state in the battery, using the charging circuit to: power the low-voltage subsystem from a target voltage of the battery; and power the high-voltage subsystem from the underpowered power source.

The method optionally further comprising: upon detecting a voltage of the low- voltage subsystem below an open-circuit voltage of the battery, using the charging circuit to power the high-voltage subsystem from a sum of currents from the input voltage and the up-converted battery voltage.

The method optionally further comprising: upon detecting the input voltage from an underpowered power source and a high-voltage state in the battery, using the charging circuit to power the low-voltage subsystem and the high- voltage subsystem from a target voltage of the battery that is higher than a voltage requirement of the high-voltage subsystem. The method optionally further comprising: upon detecting a voltage of the low-voltage subsystem below an open-circuit voltage of the battery, using the charging circuit to power the high-voltage subsystem from a sum of currents from the input voltage and the up-converted battery voltage.

The method optionally further comprising: upon detecting the input voltage from an underpowered power source and an undervoltage state in the battery: powering off the portable electronic device; and using the charging circuit to charge the battery from the input voltage.

The method optionally further comprising: upon detecting the input voltage from the power source and a low- voltage state in the battery, using the charging circuit to: power the high-voltage subsystem from the power source; down-convert the input voltage to a target voltage of the battery; and charge the battery and power the low-voltage subsystem from the target voltage.

The method optionally further comprising: upon detecting the input voltage from the power source and a fully charged state in the battery, using the charging circuit to: discontinue charging of the battery; and power the low- voltage subsystem and the high- voltage subsystem from a target voltage that is higher than the battery voltage of the battery in the fully charged state.

Optionally, the charging circuit comprises: an inductor with an input terminal and a load terminal; a first switching mechanism configured to couple the input terminal to either the power source or a reference voltage; a second switching mechanism configured to couple the load terminal to the battery, the high-voltage subsystem, and the low- voltage subsystem; and a third switching mechanism configured to couple the input voltage to the high- voltage subsystem.

Optionally, wherein the battery voltage in the low-voltage state is lower than a voltage requirement of the high- voltage subsystem.

A charging system for a portable electronic device, comprising: a bidirectional converter; and a control circuit configured to use the bidirectional converter to convert an input voltage from a power source into a set of output voltages for charging a battery in the portable electronic device and powering a low-voltage subsystem and a high-voltage subsystem in the portable electronic device.

Optionally, wherein the control circuit is further configured to: convert a battery voltage from the battery into the set of output voltages for powering the low-voltage subsystem and the high-voltage subsystem. Optionally, wherein the set of output voltages is produced by: downconverting the input voltage from the power source; or up-converting the battery voltage from the battery during discharging of the battery. Optionally, wherein the control circuit is configured to produce the set of output voltages during: standard charging from the power source; charging from an underpowered power source; and discharging of the battery. Optionally, wherein the control circuit is configured to produce the set of output voltages during: an undervoltage state in the battery; a low-voltage state in the battery; a high-voltage state in the battery; and a fully charged state in the battery.

Optionally, wherein the bidirectional converter comprises: an inductor with an input terminal and a load terminal; a first switching mechanism configured to couple the input terminal to either the power source or a reference voltage; a second switching mechanism configured to couple the load terminal to the battery, the high-voltage subsystem, and the low-voltage subsystem; and a third switching mechanism configured to couple the input voltage to the high-voltage subsystem. Optionally, wherein the first, second, and third switching mechanisms comprise field-effect transistors (FETs).

A portable electronic device, comprising: a first set of components in a high-voltage subsystem; a second set of components in a low-voltage subsystem;
a battery; and a charging circuit configured to convert an input voltage from a power source into a set of output voltages for charging the battery and powering the low-voltage subsystem and the high- voltage subsystem.

Optionally, wherein the control circuit is further configured to: convert a battery voltage from the battery into the set of output voltages for powering the low-voltage subsystem and the high-voltage subsystem. Optionally, wherein the set of output voltages is produced by: downconverting the input voltage from the power source; or up-converting the battery voltage from the battery during discharging of the battery.

Optionally, wherein the charging circuit comprises: an inductor with an input terminal and a load terminal; a first switching mechanism configured to couple the input terminal to either the power source or a reference voltage; a second switching mechanism configured to couple the load terminal to the battery, the high-voltage subsystem, and the low-voltage subsystem; and a third switching mechanism configured to couple the input voltage to the high-voltage subsystem. Optionally, wherein the first, second, and third switching mechanisms comprise field-effect transistors (FETs).

## Claims

1. A power conversion circuit for use in a portable electronic device having a battery (322) and one or more electronic subsystems (304, 306), the power conversion circuit comprising:
an inductor (308); and
a plurality of switching devices (310, 312, 314, 316, 318, 320; 330, 332, 336; 330,336, 340, 344) configured to:
responsive to availability of an input power source (302), operate in conjunction with the inductor (308) as a buck converter to charge the battery (322) from the input power source (302); and
responsive to unavailability of the input power source (302), operate in conjunction with the inductor (308) as a boost converter to power the one or more electronic subsystems (304, 306) from the battery (322).

2. The power conversion circuit of claim 1 wherein the plurality of switching devices includes a switching device (310, 332) coupled between a terminal of the portable electronic device configured to be coupled to the input power source (302) and a first terminal of the inductor (308), the switching device (310,332) being configured to turn on responsive to availability of the input power source (302) and to turn off responsive to unavailability of the input power source (302).

3. The power conversion circuit of claim 2 wherein the plurality of switching devices further includes:
a first switching device (312) coupled between a first terminal of the inductor (308) and a terminal of the portable electronic device (312) configured to receive the input power source, wherein the first switching device is configured to selectively couple the inductor (308) to the input power source (302) when operating as a buck converter; and
a second switching device (314) coupled between the first terminal of the inductor (308) and ground, wherein the second switching device (314) is configured to selectively couple the inductor (308) to ground when operating as a boost converter.

4. The power conversion circuit of claim 1 wherein the plurality of switching devices include:
a first switching device (312) coupled between a first terminal of the inductor (308) and a terminal of the portable electronic device configured to receive the input power source, wherein the first switching device (312) is configured to selectively couple the inductor (308) to the input power source (302) when operating as a buck converter; and
a second switching device (314) coupled between the first terminal of the inductor (308) and ground, wherein the second switching device (314) is configured to selectively couple the inductor (308) to ground when operating as a boost converter.

5. The power conversion circuit of any preceding claim wherein the plurality of switching devices includes a switching device (316) coupled between a second terminal of the inductor (308) and the battery (322).

6. A method of operating a power conversion circuit in a portable electronic device having a battery and one or more electronic subsystems, the method comprising:
responsive to availability of an input power source, operating a plurality of switches of the power conversion circuit in conjunction with an inductor as a buck converter to couple the input power source to the battery; and
responsive to unavailability of the input power source, operating a plurality of switches of the power conversion circuit in conjunction with the inductor as a boost converter to power the one or more electronic subsystems from the battery.

7. The method of claim 6 further comprising:
operating a switching device coupled between a terminal of the portable electronic device configured to be coupled to the input power source and a first terminal of the inductor to turn on responsive to availability of the input power source and to turn off responsive to unavailability of the input power source.

8. The method of claim 7 wherein:
operating a plurality of switches of the power conversion circuit in conjunction with an inductor as a buck converter to couple the input power source to the battery includes operating a first switching device coupled between a first terminal of the inductor and a terminal of the portable electronic device configured to receive the input power source to selectively couple the inductor to the input power source; and
operating a plurality of switches of the power conversion circuit in conjunction with the inductor as a boost converter to power the one or more electronic subsystems from the battery includes operating a second switching device coupled between the first terminal of the inductor and ground to selectively couple the inductor to ground.

9. The method of claim 6 wherein the plurality of switching devices include:
operating a plurality of switches of the power conversion circuit in conjunction with an inductor as a buck converter to couple the input power source to the battery includes operating a first switching device coupled between a first terminal of the inductor and a terminal of the portable electronic device configured to receive the input power source to selectively couple the inductor to the input power source; and
operating a plurality of switches of the power conversion circuit in conjunction with the inductor as a boost converter to power the one or more electronic subsystems from the battery includes operating a second switching device coupled between the first terminal of the inductor and ground to selectively couple the inductor to ground.

10. The method of any of claims 6 to 8 further comprising:
operating a switching device coupled between a second terminal of the inductor and the battery to selectively connect and disconnect the battery.

11. A computer-readable storage media having recorded thereon instructions to perform the method of any of claims 6 to 9.
